Europäisches Patentamt

European Patent Office

Office européen des brevets

(11) Publication number: **0 323 689**
**A1**

## (12) EUROPEAN PATENT APPLICATION

(21) Application number: 88300149.7

(22) Date of filing: 08.01.88

(51) Int. Cl.⁴: **B01D 21/01 , C02F 1/66 ,**
**//C02F1/52**

(43) Date of publication of application:
**12.07.89 Bulletin 89/28**

(84) Designated Contracting States:
**CH DE FR GB IT LI NL**

(71) Applicant: **Kabushiki Kaisha ASTEC**
**12-6 Kyomachi 1-chome**
**Himeji-shi Hyogo 670(JP)**

(72) Inventor: **Nishimura, Tsutomu**
**2, Itokuji-cho**
**Himeji-shi Hyogo 670(JP)**

(74) Representative: **Brown, John David et al**
**FORRESTER & BOEHMERT**
**Widenmayerstrasse 4/I**
**D-8000 München 22(DE)**

(54) **Method of separating and removing iron ion, aluminium ion or suspended solids by donation of proton.**

(57) A method of separating and removing iron ion, aluminium ion or suspended solids from a solution containing iron ion, aluminium ion or suspended solids by donating proton to the solution. This method can separate and remove easily a trace amount of such ions or suspended solids by an easy treatment, by a simple apparatus and at high efficiency, without generation of a large quantity of sludge.

EP 0 323 689 A1

# Method of separating and removing iron ion, aluminium ion or suspended solids by donation of proton

## BACKGROUND OF THE INVENTION

Field of the invention:

This invention relates to a method of separating and removing iron ion, aluminium ion or suspended solids by donating proton to a liquid containing iron ion, aluminium ion or suspended solids.

Description of the prior art:

Water or a solution containing iron ion, aluminium ion (hereinafter referred to as Fe ion, Al ion) or suspended solids (hereinafter referred to as SS) involves many evils when it is utilized or discarded. In a water system, for example, such ion turns into precipitates with the progress of oxidation and the precipitates collect in a pipe, with the result of an increase in load in the pipe and in its turn clogging of the pipe. If it is to be utilized as water for domestic use, because of mineral matter contained therein it is not suitable for use as drinking water and as washing water. Also, it is not suitable for use as industrial water and agricultural water.

For removing Fe ion, Al ion, and SS, coagulating sedimentation, alkali sedimentation, ion exchange, distilling treatment and the like have been practiced.

In the case of the prior arts such as mentioned above, use of a flocculant, an alkali agent or the like results in generating sludge in large quantities and it is required to remove such sludge. In practicing other prior arts, too, cost of treatment runs up to a large sum. Thus, any prior art is not suitable for treating a large quantity of liquid containing ion, etc.

## SUMMARY OF THE INVENTION

An object of the present invention is to provide a method of separating and removing easily Fe ion, Al ion or SS from a liquid containing Fe ion, Al ion or SS.

For the purpose of solving the problems mentioned above and attaining the above object, the present inventors have made earnest studies and finally discovered that donation of proton to a liquid containing Fe ion, Al ion or SS causes said ion to flocculate and become floc precipitates by which suspended solids are adsorbed as coprecipitates. This discovery has led to the present invention. The present invention comprises a method of separating and removing Fe ion, Al ion or SS by donating proton to a liquid containing Fe ion, Al ion or SS. As to the method of donating proton, various methods are available, such as the method of electrolyzing water, the ion exchange method, the electron collision method, the method of donating directly crystal water-containing proton-releasing crystalline mineral, the method by using proton dissolved water obtained by the preceding method, and the like.

As to crystal water-containing proton-releasing crystalline mineral, any material can be used so long as it has characteristic of "easy to release proton", such as natural cristobalite, synthetic cristobalite, zeolite and the like.

The amount of proton to be donated which is sufficient to turn the ion, etc. into floc precipitates is such that when it is donated to neutral water, pH lowers by about 0.3. This lowering of pH value tends to be proportional to dissolved proton.

Since the treating technique according to the present invention uses neither flocculant nor precipitant, it is entirely free from generation of a large quantity of sludge and has such outstanding effect that even a trace amount of ion or SS can be separated and removed from a solution containing Fe ion, Al ion or SS by a simple apparatus, by an easy treatment and at low cost.

## DETAILED DESCRIPTION OF THE INVENTION

A description is made below of the present invention with reference to an embodiment but the present invention is not limited to such embodiment.

In the embodiment, the method by using crystal water-containing proton-releasing crystalline mineral was employed as the easiest, cheapest and safest method of donating proton.

Embodiment:

The crystal water-containing proton-releasing crystalline mineral used in this embodiment is natural cristobalite of less than 20m.m. in size, containing $SiO_2$ 87.2% and crystal water 5.25%.

As to sample water, (1) flowing water of li River, (2) spring water at Izumo district and (3) solution generated at an iron manufacturing process were used.

Natural cristobalite of 1 kg. was soaked in water (pH 7.0) of one liter and was left for 3 - 8 hours so that proton is discharged fully in water and dissolved therein. In this case, pH of the water in which proton was dissolved was 5.20 when the water was left for three hours and was 4. 05 when the water was left for eight hours. Then, the water was drawn out and 10mℓ and 100mℓ of it were added to one liter of each sample water of the above (1), (2) and (3). Such mixture was left stationarily for 60 minutes.

Fe ion, Al ion or SS in water and in solution precipitated gently as they were turning into floc-like precipitates. The supernatant liquid showed marked tendency of removal of Fe ion, Al ion or SS.

The untreated water or untreated solution and the treated water or treated solution were all analyzed by JIS Method. The results of analysis are as shown in the following table.

| Sample | | | Proton dissolved water | | pH | | Fe ion ppm | | Al ion ppm | | SS ppm | |
|---|---|---|---|---|---|---|---|---|---|---|---|---|
| | | | pH | ml/l | Begining | End | Begining | End | Begining | End | Begining | End |
| Flowing water of li River | A | 1 | 5.20 | 10 | 7.51 | 6.82 | 1.10 | 0.62 | 3.23 | 0.81 | 2.11 | 0.6 |
| | | 2 | 5.20 | 100 | 7.51 | 6.70 | 1.10 | 0.01 | 3.23 | <0.1 | 2.11 | <0.2 |
| | B | 1 | 4.05 | 10 | 7.12 | 6.45 | 0.85 | 0.55 | 2.16 | 0.77 | 2.20 | 0.6 |
| | | 2 | 4.05 | 100 | 7.12 | 6.22 | 0.85 | 0.01 | 2.16 | <0.1 | 2.20 | <0.2 |
| Spring water at Izumo district | A | 1 | 5.20 | 10 | 9.86 | 6.70 | 3.33 | 0.71 | 16.1 | 10.6 | 18.5 | 10.5 |
| | | 2 | 5.20 | 100 | 9.86 | 6.56 | 3.33 | 0.01 | 16.1 | <0.1 | 18.5 | 0.8 |
| | B | 1 | 4.05 | 10 | 9.99 | 6.49 | 2.15 | 0.62 | 22.4 | 3.5 | 22.2 | 2.5 |
| | | 2 | 4.05 | 100 | 9.99 | 6.30 | 2.15 | 0.01 | 22.4 | <0.1 | 22.2 | <0.2 |
| Solution generated at an iron manufacturing process | A | 1 | 5.20 | 10 | 5.55 | 5.31 | 25.2 | 3.10 | 31.2 | 3.61 | 46.2 | 1.1 |
| | | 2 | 5.20 | 100 | 5.55 | 5.10 | 25.2 | 0.20 | 31.2 | <0.1 | 46.2 | 0.5 |
| | B | 1 | 4.05 | 10 | 8.32 | 6.33 | 11.6 | 1.05 | 33.5 | 1.10 | 63.4 | 0.7 |
| | | 2 | 4.05 | 100 | 8.32 | 6.08 | 11.6 | 0.01 | 33.5 | <0.1 | 63.4 | <0.2 |

The features disclosed in the foregoing description and in the following claims may, both separately and in any combination thereof, be material for realising the invention in diverse forms thereof.

**Claims**

A method of separating and removing iron ion, aluminium ion or suspended solids from a solution containing iron ion, aluminium ion or suspended solids by donating proton to the solution.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 816 305  (R. SCHUTTE)<br>* Abstract; column 2, lines 52-63; claim 1 *<br>--- | 1 | B 01 D   21/01<br>C 02 F    1/66 //<br>C 02 F    1/52 |
| X | GB-A-1 044 311  (WATER ENGINEERING LTD)<br>* Page 1, lines 43-71; claims 1,2,4,5 *<br>----- | 1 | |

**TECHNICAL FIELDS SEARCHED (Int. Cl.4)**

B 01 D
C 02 F

The present search report has been drawn up for all claims

| Place of search | Date of completion of the search | Examiner |
|---|---|---|
| THE HAGUE | 02-06-1988 | VAN IDDEKINGE R.E. |